# FASCICULE DE BREVET EUROPEEN

(11) **EP 2 029 931 B1**
(45) Date de publication et mention de la délivrance du brevet: **17.08.2011**
(21) Numéro de dépôt: 07823508.2
(22) Date de dépôt: 08.06.2007
(51) Int. Cl.: F16L 33/04, F16L 23/08, F16L 33/02, F16B 7/00

(54) **COLLIER DE SERRAGE**
KLEMMRING
CLAMPING RING

(30) Priorité: 09.06.2006 FR 0652085
(43) Date de publication de la demande: 04.03.2009
(73) Titulaire: Etablissements CAILLAU, 92130 Issy-les-Moulineaux (FR)
(72) Inventeur: PREVOT, Fabrice, F-41130 Selles-sur-Cher (FR); JAFFRE, Jérôme, F-41600 Chaumont Sur Tharonne (FR); RIGOLLET, Nicolas, F-41200 Romorantin (FR)
(74) Mandataire: Besnard, Christophe Laurent
(86) Numéro de dépôt international: PCT/FR2007/051392
(87) Numéro de publication internationale: WO 2008/006989

(56) Documents cités:
- CH-A- 234 172
- DE-C- 744 975
- FR-A- 896 003
- FR-A- 2 522 086
- US-A- 159 644

## Description

L'invention a pour objet un collier de serrage.

Un tel collier peut être utilisé pour raccorder des tuyaux, notamment dans le secteur automobile ou aéronautique (par exemple pour raccorder des tuyaux du système d'échappement ou de dépollution des gaz de combustion).

Plus particulièrement, l'invention concerne un collier de serrage du type comprenant :
- une ceinture présentant deux extrémités libres, au moins une de ces extrémités libres étant recourbée de manière à former une boucle, cette boucle étant délimitée par une portion de ceinture extérieure et une portion de ceinture intérieure sous-jacente; et
- un système de serrage apte à coopérer avec ladite boucle pour serrer ladite ceinture.

Généralement, les deux extrémités libres de ladite ceinture sont recourbées de manière à former une boucle, et ledit système de serrage permet de rapprocher lesdites boucles l'une de l'autre pour serrer ladite ceinture.

Un collier de ce type est décrit dans le document FR 2 522 086. Ce collier comprend un système de serrage avec deux pièces de retenue semi-cylindriques, logées respectivement à l'intérieur des deux boucles du collier. Ces pièces de retenue sont communément appelées tourillons.

Le premier tourillon est traversé par un trou taraudé et le deuxième tourillon est traversé par un trou lisse. Le système de serrage comprend une vis avec tige filetée et tête de vis. Chaque boucle du collier présente deux ouvertures en regard l'une de l'autre, de sorte que la tige de la vis traverse chacune des deux boucles. En outre, la tige de la vis traverse librement le trou lisse et s'engage dans le trou taraudé. Lorsqu'on visse la vis dans le premier tourillon, la tête de vis vient en prise avec le deuxième tourillon qui pousse alors contre la portion de ceinture intérieure d'une boucle, tandis que le premier tourillon pousse contre la portion de ceinture intérieure de l'autre boucle. On obtient ainsi le serrage du collier par rapprochement desdites boucles.

L'invention a pour objectif de proposer un collier de serrage du type précité qui soit dépourvu de tourillon, de manière à limiter le nombre de pièces du collier et, ainsi, simplifier son assemblage, et/ou diminuer son coût de fabrication, tout en conservant de bonnes performances de serrage.

Cet objectif est atteint par un collier de serrage du type précité, dans lequel ladite portion de ceinture extérieure de ladite boucle présente une partie enfoncée, en retrait par rapport au contour extérieur de la boucle, qui définit une paroi de serrage avec laquelle le système de serrage vient en prise, cette partie enfoncée étant bordée latéralement par deux segments de bord de la portion de ceinture extérieure.

Le système de serrage venant en prise avec la paroi de serrage de la portion de ceinture extérieure, la présence d'un tourillon à l'intérieur de ladite boucle n'est pas nécessaire.

En outre, avec le collier de l'invention, contrairement au collier de FR 2 522 086, les efforts exercés sur la boucle par le système de serrage ne s'exercent plus sur la portion de ceinture intérieure, par l'intérieur de la boucle, mais sur la portion de ceinture extérieure, par l'extérieur de la boucle. Pour tenir compte de cette nouvelle répartition des efforts, on a prévu lesdits segments de bord qui jouent le rôle de haubans et retiennent la partie de la boucle située en aval de la paroi de serrage afin d'éviter que celle-ci se déforme lors du serrage. L'amont et l'aval sont définis dans la présente demande par rapport au sens de l'effort exercé par le système de serrage sur la boucle considérée.

L'invention et ses avantages seront mieux compris à la lecture de la description détaillée qui suit, de plusieurs exemples de colliers selon l'invention. Cette description fait référence aux figures annexées, sur lesquelles :
- les figures 1 et 2 représentent un premier exemple de collier;
- la figure 3 représente un deuxième exemple de collier ;
- la figure 4 représente un troisième exemple de collier ;
- les figures 5 et 6 représentent un quatrième exemple de collier ;
- la figure 7 représente un cinquième exemple de collier ; et
- la figure 8 représente un sixième exemple de collier.

Les exemples de colliers des figures présentent de nombreuses caractéristiques communes. Ces caractéristiques communes sont décrites ci-après et repérées sur les figures par les mêmes références numériques.

Chaque collier de serrage comprend une ceinture 3 avec deux extrémités libres. Chacune de ces extrémités libres est recourbée de manière à former une boucle 5 et chaque boucle 5 est donc délimitée par une portion de ceinture extérieure 7 et une portion de ceinture intérieure sous-jacente 9. On définit la base 11 de la boucle 5 comme étant la zone de la boucle la plus proche de la partie médiane de la ceinture 3, et l'extrémité 13 de la boucle 5 comme étant la zone de la boucle opposée à cette base 11 (i.e. la zone la plus éloignée de la partie médiane de la ceinture 3).

En position de serrage maximum du collier, l'espace entre les extrémités 13 des boucles 5 est minimum.

Chaque collier comprend également un système de serrage qui sera décrit plus loin.

La portion de ceinture extérieure 7 présente une partie enfoncée 15, en retrait par rapport au contour extérieur de la boucle 5. Cette partie enfoncée définit une paroi de serrage 17 contre laquelle le système de serrage vient en appui. En outre, cette partie enfoncée est bordée latéralement par deux segments de bord 19 de la portion de ceinture extérieure 7.

Chaque segment de bord est sensiblement rectiligne et joint un premier point 20 de la portion de ceinture extérieure situé juste en amont de la partie enfoncée 15, à un deuxième point 21 de la portion de ceinture extérieure situé juste en aval de la partie enfoncée 15. Le premier point 20 est généralement proche de la base 11 de la boucle et, avantageusement, au niveau de cette base 11. Le segment de bord 19 joue mécaniquement le rôle d'un hauban, tendu entre l'amont et l'aval de la partie enfoncée 15.

Les exemples de colliers de serrage représentés présentent une section de forme générale circulaire. Alors, avantageusement, la paroi de serrage 17 est orientée sensiblement radialement, tandis que les segments de bord 19 forment avec un rayon du collier un angle A supérieur à 30°. En effet, les segments de bord 13 retiennent d'autant mieux la partie de la boucle située en aval de la paroi de serrage 17, que l'angle A est grand.

La paroi de serrage 17 est sensiblement plane. La partie enfoncée 15 présente éventuellement une autre paroi 23 sensiblement plane qui fait face à la paroi de serrage 17 et forme un angle non nul avec cette dernière. Les parois 17 et 23 forment la paroi de fond de la partie enfoncée 15.

Dans les exemples, la paroi 23 est en appui contre la portion de ceinture intérieure 9. La paroi de serrage 17 étant orientée sensiblement radialement, l'angle formé entre les parois 17 et 23 est donc proche de 90° (il est d'autant plus proche de 90° que le rayon du collier est important). Lorsque la paroi 23 est en appui sur la portion de ceinture intérieure 9, elle joue le rôle de patin de répartition des efforts radiaux, exercés par le système de serrage sur la portion de ceinture intérieure 9. Ensuite, la portion de ceinture intérieure 9 répartit à son tour lesdits efforts radiaux sur l'objet à serrer.

Selon un autre aspect des colliers de l'invention, chaque boucle 5 présente deux ouvertures 25 et 27 en regard l'une de l'autre. La première ouverture 27 est ménagée dans la paroi de serrage 17. La deuxième ouverture 25 est ménagée au niveau de l'extrémité 13 de la boucle 5. De plus, le système de serrage du collier (décrit plus loin) comprend une tige 29 apte à être engagée dans ces ouvertures 25 et 27, de manière à traverser chacune des boucles 5.

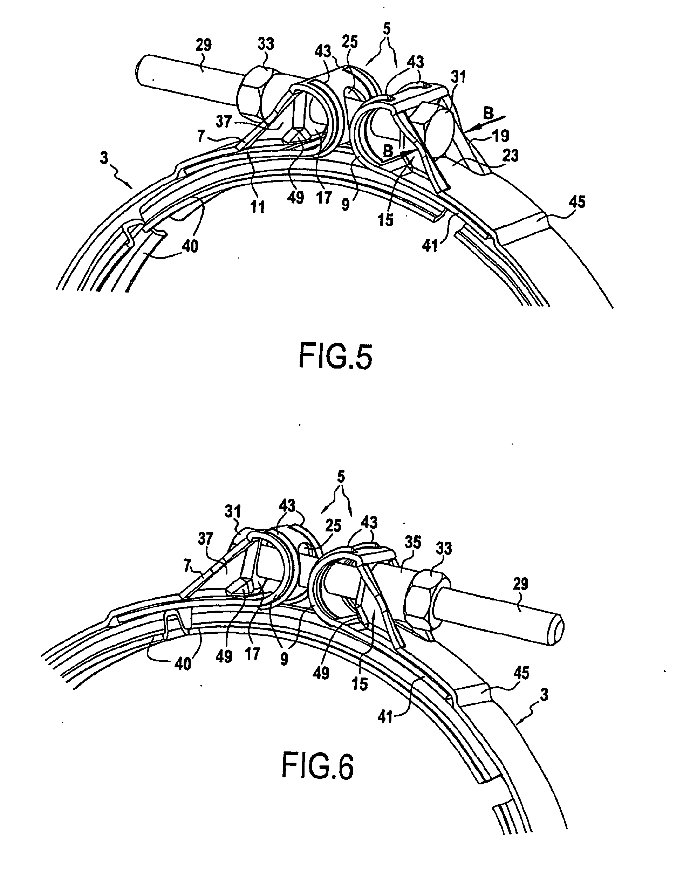

Lorsqu'on souhaite utiliser le même collier pour des objets à serrer de diamètres différents, il faut que la tige 29 du système de serrage puisse se déplacer radialement par rapport aux extrémités 13 des boucles 5. Pour autoriser un tel déplacement radial, les deuxièmes ouvertures 25 sont oblongues, leur plus grande longueur étant orientée radialement (voir figures 5 à 8). Si nécessaire, les premières ouvertures 27 peuvent également être oblongues.

Nous allons maintenant décrire le système de serrage utilisé pour tous les colliers représentés. On notera que d'autres systèmes pourraient être utilisés, du moment qu'ils viennent en prise contre les parois de serrage 17 et qu'ils permettent de rapprocher les boucles 5 l'une de l'autre.

Le système de serrage considéré comprend un ensemble vis/écrou comportant une vis avec tige filetée 29 et tête de vis 31, un écrou 33, et une entretoise 35 ayant, ici, une forme de manchon. Le diamètre de la vis est choisi tel que celle-ci puisse traverser les ouvertures 25 et 27. En revanche, le diamètre de la tête de vis 31 et celui de l'entretoise 35 sont choisis tels que ceux-ci ne puissent pas traverser les ouvertures 25 et 27. Dans l'exemple, l'entretoise 35 est disposée entre l'écrou 33 et la ceinture, mais elle pourrait être disposée entre la tête de vis 31 et la ceinture. En outre, l'entretoise 35 peut être distincte, ou solidaire, de l'écrou 33 ou de la tête de vis 31.

Ainsi, la tête de vis 31 et l'écrou 33, via l'entretoise 35, viennent en prise sur les parois de serrage 17 des boucles 5. L'entretoise 35 est utilisé pour pouvoir maintenir l'écrou 33 ou la tête de vis en dehors de la partie enfoncée 15, et ainsi permettre de manoeuvre facilement cet écrou à l'aide d'un outil. La présence de l'entretoise 35 est, bien entendu, optionnelle. Par exemple, aucune entretoise 35 n'est nécessaire lorsque la partie enfoncée 15 est de largeur suffisante pour pouvoir manoeuvrer l'écrou 33 (ou la tête de vis 31), ou lorsque l'écrou (ou la tête de vis) est suffisamment long et ressort de la partie enfoncée 15.

Par ailleurs, on notera que la forme et les dimensions de la partie enfoncée 15 sont choisies, avantageusement, de manière à bloquer la tête de vis 31 ou l'écrou 33 en rotation. Ainsi, on n'a pas à maintenir la tête de vis ou l'écrou, lors du vissage de l'ensemble vis/écrou.

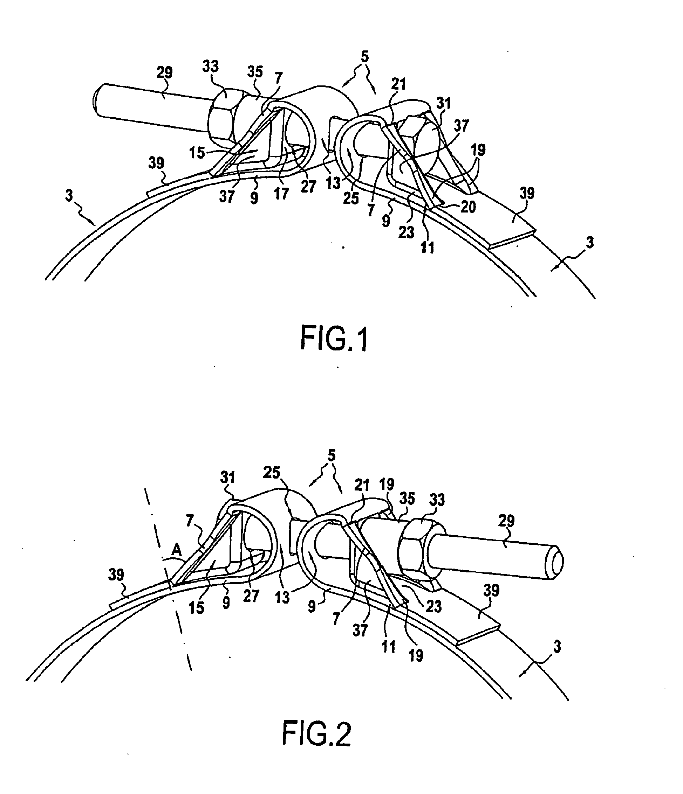

Nous allons maintenant décrire les particularités de chacun des exemples de colliers représentés sur les figures 1 à 7.

Le premier exemple de collier représenté sur les figures 1 et 2 est tel que la partie enfoncée 15 présente deux parois latérales 37 qui rejoignent les segments de bord 19. Ces parois latérales 37 s'étendent donc entre les parois 17 et 23, qui forment la paroi de fond de la partie enfoncée 15, et les segments de bord 19 situés à la surface de la partie enfoncée 15 et de chaque côté de celle-ci.

Dans la pratique, la partie enfoncée 15 est réalisée par emboutissage de la portion de ceinture extérieure 7.

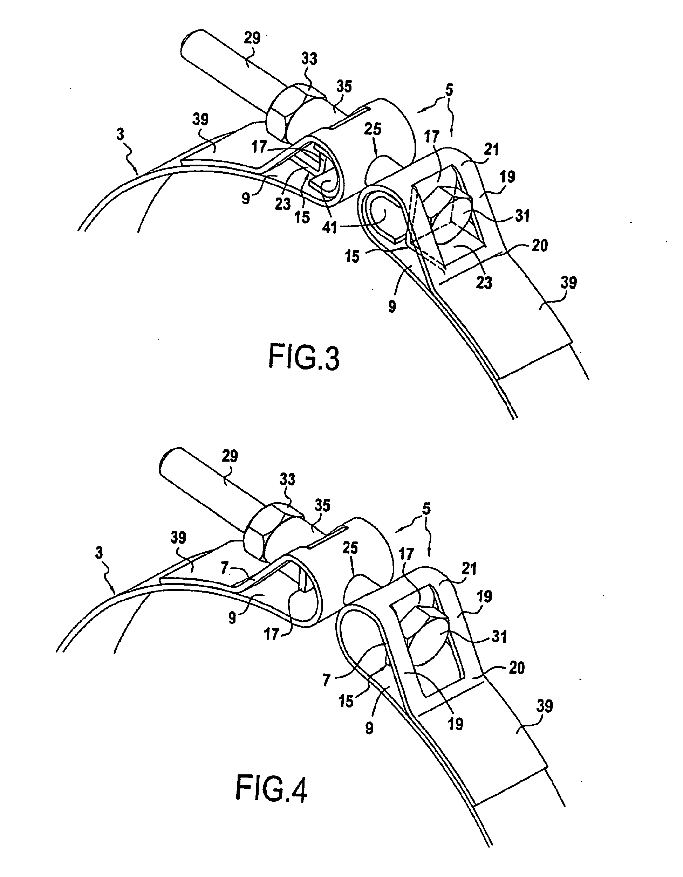

Le deuxième exemple de collier représenté sur la figure 3 est tel que la partie enfoncée 15 est découpée dans la portion de ceinture extérieure 7 de manière à être séparée des segments de bord 19. Ce collier est donc dépourvu de paroi latérale 37 et présente, à la place, des évidements. Les découpes réalisées sont uniquement des découpes latérales faites le long des segments de bord 19, de sorte que la partie enfoncée 15 présente une paroi de fond, formée par les parois 17 et 23, qui est reliée au reste de la portion de ceinture extérieure 7 par son bord amont et son bord aval.

Dans la pratique, la partie enfoncée 15 est réalisée par emboutissage de la portion de ceinture extérieure 7.

Le collier de la figure 3 comprend, en outre, des inserts de renfort 41. Chaque insert 41 est disposé dans l'espace ménagé à l'intérieur de la boucle 5, entre la paroi de serrage 17 et l'extrémité 13 de la boucle 5, et épouse le contour intérieur de cet espace.

Ces inserts 41 s'opposent à une déformation (un écrasement) des boucles 5 sous l'action des moyens de serrage. Le système de serrage ne vient pas en prise sur ces inserts 41, qui ne sont donc pas comparables aux tourillons de l'art antérieur.

Contrairement aux tourillons de l'art antérieur, les inserts 41 n'ont pas besoin d'être des pièces suffisamment rigides (le plus souvent pleines) pour transmettre les efforts de serrage. Ainsi, dans l'exemple, les inserts 41 sont réalisés par découpage et mise en forme d'une bande métallique. Avantageusement, cette bande est la même que celle utilisée pour le collier, de sorte que le coût de fabrication du collier reste limité.

Dans l'exemple, chaque insert 41 présente la forme d'une gouttière dont le fond est disposé contre l'extrémité 13 de la boucle 5 et dont les extrémités libres sont disposées contre la paroi de serrage 17.

Le troisième exemple de collier, représenté sur la figure 4, est analogue à celui de la figure 3 aux seules différences que :
- pour réaliser la partie enfoncée 15, on découpe une languette dans la portion de ceinture extérieure et on enfonce cette languette pour qu'elle forme la paroi de serrage 17. La partie enfoncée 15 présente une paroi de fond formée par la seule parois 17 (elle est dépourvue de paroi 23), qui est reliée au reste de la portion de bande extérieure 7 par son bord aval uniquement ; et
- le collier de la figure 4 ne comprend pas d'insert 41.

On notera que la ceinture du collier de la figure 4, doit être suffisamment rigide au niveau de la languette 17 pour que celle-ci ne s'enfonce pas à l'intérieur de la boucle 5 lors du serrage.

Les colliers des figures 1 à 4 sont tels que chaque extrémité libre de la ceinture 3 est recourbée vers l'extérieur pour former la boucle 5 et qu'une portion d'extrémité 39 de la ceinture 3 est plaquée puis soudée sur la face extérieure de la ceinture 3 de sorte que dans cette zone (i.e. la zone située juste en amont de la base 11 de la boucle 5) le collier présente une double épaisseur de ceinture.

Le quatrième exemple de collier, représenté sur les figures 5 et 6, est tel qu'une portion de ceinture, située au niveau de l'extrémité 13 de la boucle 5, présente deux nervures 43 de renfort orientées circonférenciellement et situées sur ses bords latéraux. Ces nervures 43 permettent de renforcer la tenue mécanique de la boucle 5 afin d'empêcher sa déformation (son écrasement) sous l'action des moyens de serrage. Ces nervures 43 sont réalisées par emboutissage de la ceinture.

La partie enfoncée 15 du collier des figures 5 et 6 est telle qu'elle présente des parois latérales 37 (comme le collier des figures 1 et 2); et telle que la paroi de serrage 17 et la paroi 23 définissent entre elles une ligne d'intersection. De plus, la partie enfoncée 15 présente des facettes 49 dans les zones de jonction entre la ligne d'intersection et les parois latérales 37. Ces facettes 49 sont réalisées lors de la formation de la partie enfoncée 15 par emboutissage.

Les facettes 49 permettent de limiter le phénomène de rétrécissement, repéré par les flèches B, localisé dans la partie médiane des bras 19, et ayant lieu lors de l'emboutissage. En effet, grâce aux facettes 49, la quantité de matière enfoncée au niveau de ladite ligne d'intersection est moindre, de sorte que la diminution de la largeur des segments de bord 19, au droit de cette ligne d'intersection, est également moindre.

Enfin, on notera que plusieurs segments 40 de section en V ou en U, dont la concavité est tournée vers le centre du collier, sont rapportés sur la face intérieure de la ceinture 3. Ceci permet, par exemple, d'utiliser le collier pour raccorder bout à bout deux tubes aux extrémités tronconiques.

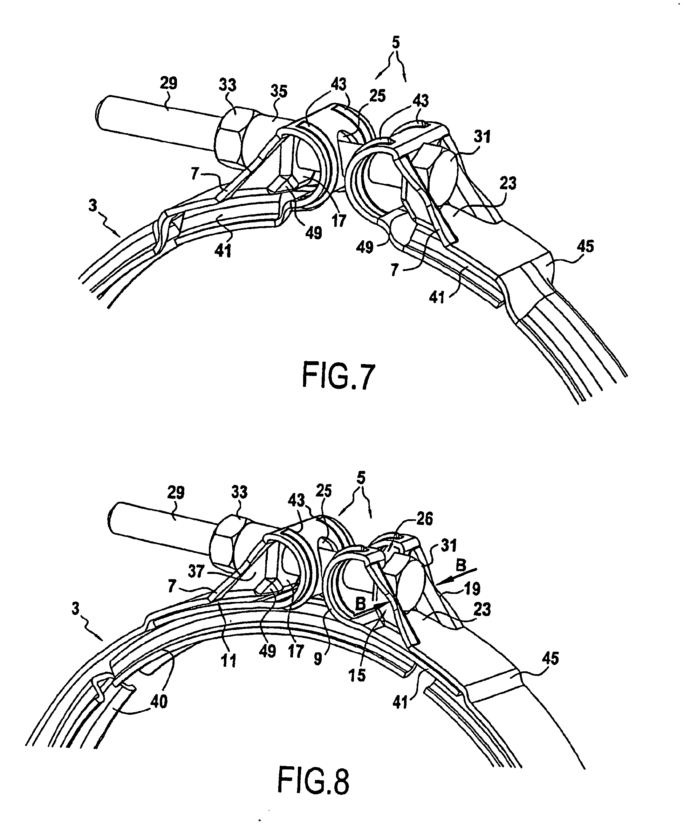

Le cinquième exemple de collier représenté sur la figure 7 est analogue à celui de la figure 6 à la seule différence qu'il ne comprend pas de segments rapportés sur la face intérieure de la ceinture 3, car c'est la ceinture elle-même qui présente une section en V ou en U dont la concavité est tournée vers le centre du collier. On notera que seules les parties de ceinture destinées à venir au contact de l'objet à serrer présentent une telle section.

Le sixième exemple de collier représenté sur la figure 8 est analogue à celui des figures 4 et 5, à la seule différence que les ouvertures 25 et 27 de la boucle 5 recevant la tête de vis 31, sont une seule et même ouverture oblongue 26 s'étendant depuis la paroi de serrage 17 jusqu'à l'extrémité 13 de la boucle 5. Bien entendu, l'ouverture oblongue 26 pourrait être réalisée, en alternative, dans la boucle 5 recevant l'écrou 33 ou dans les deux boucles 5. Ceci permet d'ouvrir facilement le collier en dégageant radialement la tige 29 de la vis, de la (ou des) boucle(s) 5 concernée(s), et donc de poser plus facilement le collier sur l'objet à serrer.

On notera que les colliers des figures 5 à 8 sont tels que chaque extrémité libre de la ceinture est recourbée vers l'intérieur pour former la boucle 5 et qu'une portion d'extrémité 41 de la ceinture est plaquée contre la face intérieure de cette ceinture 3, de sorte que dans cette zone (i.e. la zone située juste en amont de la base 11 de la boucle 5), le collier présente une double épaisseur de ceinture. Ladite portion d'extrémité 41 n'a pas besoin d'être soudée sur la ceinture 3 car elle est peu sollicitée lors du serrage du collier. En effet, les efforts de serrage s'exercent sur la portion de ceinture extérieure 7 de la boucle 5. Avantageusement, on ne réalise donc pas d'opérations de soudage lors de la fabrication du collier.

Lors du serrage du collier, ladite portion d'extrémité 41 est comprimée entre l'objet à serrer et la portion de ceinture 3 qui la recouvre. Naissent alors des forces de frottement qui peuvent être suffisantes pour empêcher tout déplacement circonférentiel de la portion d'extrémité 41 et s'opposer, ainsi, à la déformation de la boucle 5. Si ces forces de frottement sont toutefois insuffisantes, on réalise sur la ceinture 3 un épaulement 45 contre lequel la portion d'extrémité 41 vient en butée lors du serrage du collier. En outre, la hauteur de l'épaulement 45 est au moins environ égale, et de préférence égale, à l'épaisseur de la portion d'extrémité 41 de manière à assurer la continuité du contour de serrage de la ceinture au niveau de cet épaulement 45.

L'épaulement 45 est, par exemple, réalisé par emboutissage, lors de la mise en forme de la ceinture 3.

## Revendications

1. Collier de serrage comprenant :
- une ceinture (3) présentant deux extrémités libres, au moins une de ces extrémités libres étant recourbée de manière à former une boucle (5), cette boucle étant délimitée par une portion de ceinture extérieure (7) et une portion de ceinture intérieure sous-jacente (9) ; et
- un système de serrage apte à coopérer avec ladite boucle pour serrer ladite ceinture (3),
**caractérisé en ce que** ladite portion de ceinture extérieure (7) présente une partie enfoncée (15), en retrait par rapport au contour extérieur de la boucle, qui définit une paroi de serrage (17) avec laquelle le système de serrage vient en prise, cette partie enfoncée (15) étant bordée latéralement par deux segments de bord (19) de la portion de ceinture extérieure (7).

2. Collier de serrage selon la revendication 1, dans lequel les deux extrémités libres de ladite ceinture (3) sont recourbées de manière à former une boucle (5), et dans lequel ledit système de serrage permet de rapprocher lesdites boucles (5) l'une de l'autre pour serrer ladite ceinture.

3. Collier de serrage selon la revendication 1 ou 2, dans lequel la partie enfoncée (15) est découpée dans la portion de ceinture extérieure (7) de manière à être séparée des segments de bord (19).

4. Collier de serrage selon la revendication 1 ou 2, dans lequel la partie enfoncée (15) présente deux parois latérales (37) qui rejoignent les segments de bord (19).

5. Collier de serrage selon l'une quelconque des revendications 1 à 4, dans lequel chaque segment de bord (19) est sensiblement rectiligne et joint un premier point (20) de la portion de ceinture extérieure (7) situé juste en amont de la partie enfoncée (15), à un deuxième point (21) de la portion de ceinture extérieure (7) situé juste en aval de la partie enfoncée.

6. Collier de serrage selon l'une quelconque des revendications 1 à 5, présentant une section de forme générale circulaire, dans lequel la paroi de serrage (17) est orientée sensiblement radialement.

7. Collier de serrage selon l'une quelconque des revendications 1 à 6, dans lequel les segments de bord (19) forment avec un rayon du collier un angle (A) au moins égal à 30°.

8. Collier de serrage selon l'une quelconque des revendications 1 à 7, dans lequel la paroi de serrage (17) est sensiblement plane et la partie enfoncée (15) présente une autre paroi (23) sensiblement plane, qui fait face à la paroi de serrage (17) et forme un angle non nul avec elle.

9. Collier de serrage selon la revendication 8, dans lequel ladite autre paroi (23) est en appui contre la portion de ceinture intérieure (9).

10. Collier de serrage selon la revendication 8 ou 9, dans lequel la paroi de serrage (17) et ladite autre paroi (23) définissent entre elles une ligne d'intersection, et en ce que la partie enfoncée (15) présente des facettes (49) dans les zones de jonction entre la ligne d'intersection et les parois latérales (37).

11. Collier de serrage selon l'une quelconque des revendications 1 à 10, dans lequel ladite boucle (5) présente une première ouverture (27) ménagée dans sa paroi de serrage (17) et une deuxième ouverture (25) en regard de la première, et dans lequel le système de serrage comprend une tige (29) apte à être engagée dans ces ouvertures (25, 27), de manière à traverser chacune des deux boucles.

12. Collier de serrage selon la revendication 11, dans lequel ladite deuxième ouverture (25) est oblongue.

13. Collier de serrage selon l'une quelconque des revendications 1 à 12, dans lequel le système de serrage comprend un ensemble vis/écrou dont la tige (29) de la vis traverse ladite boucles (5), la tête de la vis (31) ou l'écrou (33) venant respectivement en prise, directement ou via une entretoise (35), sur la paroi de serrage (17) de la boucle (5).

## Claims

1. A clamping collar comprising:
- a belt (3) having two free ends, at least one of said free ends being curved back to form a loop (5), said loop being defined by an outer belt portion (7) and by an underlying inner belt portion (9); and
- a tightening system suitable for co-operating with said loop so as to tighten said belt (3);
said clamping collar being **characterized in that** said outer belt portion (7) presents a pushed-in portion (15), set back relative to the outer outline of the loop, which pushed-in portion (15) defines a tightening wall (17) with which the tightening system comes into engagement, said pushed-in portion (15) being flanked on either side by respective ones of two edge segments (19) of the outer belt portion (7).

2. A clamping collar according to claim 1, in which the two free ends of said belt (3) are curved back in such a manner as to form a loop (5), and in which said tightening system makes it possible to bring said loops (5) closer together so as to tighten said belt.

3. A clamping collar according to claim 1 or claim 2, in which the pushed-in portion (15) is cut out from the outer belt portion (7) in such a manner as to be separate from the edge segments (19).

4. A clamping collar according to claim 1 or claim 2, in which the pushed-in portion (15) has two side walls (37) that connect to the edge segments (19).

5. A clamping collar according to any one of claims 1 to 4, in which each edge segment (19) is substantially rectilinear and connects a first point (20) of the outer belt portion (7) that is situated immediately upstream from the pushed-in portion (15) to a second point (21) of the outer belt portion (7) situated immediately downstream from the pushed-in portion.

6. A clamping collar according to any one of claims 1 to 5, presenting a section that is generally circular in shape, in which collar the tightening wall (17) extends substantially radially.

7. A clamping collar according to any one of claims 1 to 6, in which the edge segments (19) form an angle (A) of at least equal to 30° with a radius of the collar.

8. A clamping collar according to any one of claims 1 to 7, in which the tightening wall (17) is substantially plane and the pushed-in portion (15) presents another substantially plane wall (23) that faces the tightening wall (17) and that forms a non-zero angle therewith.

9. A clamping collar according to claim 8, in which said other wall (23) bears against the inner belt portion (9).

10. A clamping collar according to claim 8 or claim 9, in which the tightening wall (17) and said other wall (23) define between them an intersection line, and in that the pushed-in portion (15) has facets (49) in the junction zones between the intersection line and the side walls (37).

11. A clamping collar according to any one of claims 1 to 10, in which said loop (5) has a first opening (27) provided in its tightening wall (17) and a second opening (25) in register with the first opening, and in which the tightening system comprises a shank (29) suitable for being engaged in said openings (25, 27), in such a manner as to pass through each of the loops.

12. A clamping collar according to claim 11, in which said second opening (25) is oblong.

13. A clamping collar according to any one of claims 1 to 12, in which the tightening system comprises a nut-and-bolt assembly having the shank (29) of its bolt passing through said loops (5), the bolt head (31) or the nut (33) coming respectively into engagement directly or via a spacer (35) against the tightening wall (17) of the loop (5).

## Patentansprüche

1. Klemmschelle umfassend:
- einen Ring (3), der zwei freie Enden aufweist, wobei wenigstens eines dieser freien Enden derart umgebogen ist, daß es eine Schlaufe (5) bildet, wobei diese Schlaufe durch einen äußeren Ringabschnitt (7) und einen darunterliegenden inneren Ringabschnitt (9) begrenzt ist, und
- ein Klemmsystem, das dazu geeignet ist, mit der Schlaufe zusammenzuwirken, um den Ring (3) festzuklemmen,
**dadurch gekennzeichnet, daß** der äußere Ringabschnitt (7) einen gegenüber der Außenkontur der Schlaufe zurückliegenden vertieften Teil (15) aufweist, der eine Klemmwand (17) definiert, mit der das Klemmsystem in Eingriff gelangt, wobei dieser vertiefte Teil (15) durch zwei Randsegmente (19) des äußeren Ringabschnitts (7) seitlich eingefaßt ist.

2. Klemmschelle nach Anspruch 1, bei der die beiden freien Enden des Rings (3) derart umgebogen sind, daß sie eine Schlaufe (5) bilden, und bei der das Klemmsystem ermöglicht, die Schlaufen (5) einander zu nähern, um den Ring festzuklemmen.

3. Klemmschelle nach Anspruch 1 oder 2, bei der der vertiefte Teil (15) aus dem äußeren Ringabschnitt (7) derart ausgeschnitten ist, daß er von den Randsegmenten (19) getrennt ist.

4. Klemmschelle nach Anspruch 1 oder 2, bei der der vertiefte Teil (15) zwei Seitenwände (37) aufweist, welche die Randsegmente (19) verbinden.

5. Klemmschelle nach einem der Ansprüche 1 bis 4, bei der jedes Randsegment (19) im wesentlichen geradlinig ist und einen direkt vor dem vertieften Teil (15) gelegenen ersten Punkt (20) des äußeren Ringabschnitts (7) mit einem direkt hinter dem vertieften Teil gelegenen zweiten Punkt (21) des äußeren Ringabschnitts (7) verbindet.

6. Klemmschelle nach einem der Ansprüche 1 bis 5, mit einem allgemein kreisförmigen Querschnitt, bei der die Klemmwand (17) im wesentlichen radial ausgerichtet ist.

7. Klemmschelle nach einem der Ansprüche 1 bis 6, bei der die Randsegmente (19) mit einem Radius der Schelle einen Winkel (A) von wenigstens gleich 30° bilden.

8. Klemmschelle nach einem der Ansprüche 1 bis 7, bei der die Klemmwand (17) im wesentlichen eben ist und der vertiefte Teil (15) eine weitere im wesentlichen ebene Wand (23) aufweist, die der Klemmwand (17) gegenüberliegt und mit dieser einen Winkel ungleich Null bildet.

9. Klemmschelle nach Anspruch 8, bei der die weitere Wand (23) an dem inneren Ringabschnitt (9) in Anlage ist.

10. Klemmschelle nach Anspruch 8 oder 9, bei der die Klemmwand (17) und die weitere Wand (23) zwischen sich eine Schnittlinie bilden und daß der vertiefte Teil (15) in den Verbindungsbereichen zwischen der Schnittlinie und den Seitenwänden (37) Facetten (49) aufweist.

11. Klemmschelle nach einem der Ansprüche 1 bis 10, bei der die Schlaufe (5) eine erste Öffnung (27) aufweist, die in ihrer Klemmwand (17) ausgebildet ist, sowie eine der ersten gegenüberliegende zweite Öffnung (25), und bei der das Klemmsystem einen Stift (29) umfaßt, der geeignet ist, in diese Öffnungen (25, 27) eingesteckt zu werden, um jede der beiden Schlaufen zu durchgreifen.

12. Klemmschelle nach Anspruch 11, bei der die zweite Öffnung (25) länglich ist.

13. Klemmschelle nach einem der Ansprüche 1 bis 12, bei der das Klemmsystem eine Schraube/Mutter-Anordnung umfaßt, deren Schraubenschaft (29) die Schlaufen (5) durchgreift, wobei der Schraubenkopf (31) oder die Mutter (33) jeweils - direkt oder über einen Steg (35) - an der Klemmwand (17) der Schlaufe (5) in Eingriff gelangt.
